# EUROPEAN PATENT APPLICATION

(11) **EP 4 845 268 A1**
(43) Date of publication of application: **25.11.2026**
(21) Application number: 24925909.4
(22) Date of filing: 22.02.2024
(51) Int. Cl.: H04W 72/0453, H04W 24/00, H04W 72/51, H04W 72/563

(54) **COMMUNICATION CONTROL DEVICE, WIRELESS COMMUNICATION SYSTEM, COMMUNICATION CONTROL METHOD, AND COMMUNICATION CONTROL PROGRAM**

(71) Applicant: Softbank Corp., Tokyo 105-7529 (JP)
(72) Inventor: NOZAKI, Kiyoshi, Tokyo 105-7529 (JP)
(74) Representative: SSM Sandmair
(86) International application number: PCT/JP2024/006664
(87) International publication number: WO 2025/177578

(57) **Abstract**

A communication control apparatus (100) includes an acquisition unit (131), a generation unit (132), a decision unit (133), and a control unit (134). The acquisition unit (131) acquires, as context information on a user of a terminal device (30), traffic information that is related to traffic generated by the terminal device (30) during wireless communication performed with a base station (20), and movement information that is related to a movement of the terminal device (30) according to the traffic. The generation unit (132) a model that indicates a tendency of context of the user in accordance with a frequency band by training a relationship between result information that indicates whether or not the frequency band that has been used by the terminal device (30) when the context information has been acquired is optimal for the context information from among the frequency bands that are able to be supported by the base station (20) and the context information. The decision unit (133) decides, based on the model, the frequency band that is a target of use and to which priority is given for a use by the terminal device (30) in the wireless communication. The control unit (134) performs control such that the wireless communication is performed in the frequency band that is the target of use.

## Description

### Field

The present invention relates to a communication control apparatus, a wireless communication system, a communication control method, and a communication control program.

### Background

In recent years, with the widespread use of smartphones and tablet terminal devices, wireless communication systems (wireless cellular network systems) are being established in various places. The terminal devices are also referred to as mobile stations, and perform a handover that switches wireless base stations located at the communication destination in accordance with a movement. Accordingly, a technology for implementing a low latency handover has been proposed.

### Citation List

### Patent Literature

Patent Literature 1: Japanese Laid-open Patent Publication No. 2022-123341

### Summary

### Technical Problem

When focusing on the traffic (for example, an amount of traffic or a traffic behavior) generated by a terminal device in response to a user operation, there may be a case in which there are some terminal devices that do not require enough traffic that utilizes a high frequency band, but are able to ensure sufficient communication quality even when using a medium frequency band or a low frequency band. On the other hand, there may be a case in which there are terminal devices that generate traffic for which the use of the medium frequency band or the low frequency band is insufficient, and which require the use of the high frequency band to ensure communication quality.

In this way, it can be said that there is an optimum frequency band for the terminal devices to use from a standpoint of traffic. However, a specification is designed such that a degree of priority of the frequency band is determined on the base station side, so that the terminal devices will accordingly communicate wirelessly with the base station by giving priority to a specific frequency band in accordance with the degree of priority that has been defined by the base station side, regardless of a traffic condition.

In that case, this leads to a problem of a shortage of wireless resources as a result of many terminal devices tending to concentrate on using a specific frequency band. Furthermore, the terminal devices generally perform cell searches starting with the high frequency band in which a degree of priority is set to be high, so that the terminal devices tend to select a cell in the high frequency band as a standby destination. As a result of this, another problem is the frequent handovers that occur when the terminal devices connect to the base station by using a high frequency band with limited coverage.

For the reasons stated above, there is a need to optimize the frequency band that is used by the terminal devices. However, the conventional technology described above merely uses machine learning to determine the frequencies predicted to be available as the frequencies to be used for wireless communication, it does not take traffic of the terminal device into account at the time of determination of the frequency band to be used. For this reason, with the conventional technology described above, it is not possible to always allow for the optimization of the frequency band to be used by the terminal device.

Accordingly, in the present invention, a communication control apparatus, a wireless communication system, a communication control method, and a communication control program capable of optimizing a frequency band to be used by a terminal device are proposed. As will be described later, the communication control apparatus may be packaged as, for example, a RAN Intelligent Controller (RIC).

### Solution to Problem

According to one aspect of an embodiment, A communication control apparatus includes:
an acquisition unit that acquires, as context information on a user of a terminal device, traffic information that is related to traffic generated by the terminal device during wireless communication performed with a base station and movement information that is related to a movement of the terminal device according to the traffic;
a generation unit that generates a model that indicates a tendency of context of the user in accordance with a frequency band by training a relationship between result information that indicates whether or not the frequency band that has been used by the terminal device when the context information has been acquired is optimal for the context information from among the frequency bands that are able to be supported by the base station and the context information;
a decision unit that decides, based on the model, the frequency band that is a target of use and to which priority is given for a use by the terminal device in the wireless communication; and
a control unit that performs control such that the wireless communication is performed in the frequency band that is the target of use.

### Advantageous Effects of Invention

According to the present invention, it is possible to optimize a frequency band to be used by a terminal device.

### Brief Description of Drawings

FIG. 1 is an explanation diagram for explaining a problem of a frequent occurrence of a handover.
FIG. 2 is an explanation diagram illustrating one example of a schematic configuration of a system according to the present embodiment.
FIG. 3 is a diagram simply illustrating an architecture of a 5G core in a wireless communication system according to an embodiment.
FIG. 4 is a diagram conceptually illustrating advantages of installation of a communication control apparatus at a local community center.
FIG. 5 is a diagram illustrating a configuration of an AI-RAN.
FIG. 6 is a diagram illustrating an example of a configuration of the communication control apparatus according to the embodiment.
FIG. 7 is a diagram for explaining a procedure of a training process implemented by the wireless communication system.
FIG. 8 is a diagram for explaining a procedure of an inference process implemented by the wireless communication system.
FIG. 9 is a hardware configuration diagram illustrating one example of a computer that implements a function of the communication control apparatus according to the embodiment.

### Description of Embodiments

An embodiment of the present disclosure will be explained below with reference to the accompanying drawings. Moreover, in the present application and drawings, by assigning the same reference numerals to the components having substantially the same functional configuration, duplicated descriptions thereof will be omitted.

One or a plurality of embodiments (including a practical example, a modification, and an application example) explained below are able to be performed independently. On the other hand, at least some of the plurality of embodiments explained below may also be used in combination with at least some of the other embodiments as appropriate. The plurality of embodiments may include different novel features. Therefore, the plurality of embodiments may contribute to solving different purposes or problems, and may provide effects that are different from one another.

### (Embodiment)

### [1. Introduction]

It is assumed that a large number of unspecified users are using their terminal devices in the interior of a public transportation facility (for example, an electric train). In this case, the movement status is the same across the terminal devices, but the usage status of each of the terminal devices varies for each user. For example, some terminal devices acquire data with a relatively large amount of traffic in response to a moving image browsing operation performed by users, whereas other terminal devices acquire data with a relatively small amount of traffic in response to a still image browsing operation performed by users. Furthermore, there may also be terminal devices that are in a standby mode in which the user performs no operations at all and no wireless communication with the base station takes place.

In this case, it is appropriate to allow the terminal device with a relatively large amount of traffic to use a high frequency band from the viewpoint of the communication quality. On the other hand, for a terminal device with a relatively small amount of traffic or with no amount of traffic, it may be possible to ensure sufficient communication quality even if the terminal device uses a medium frequency band or a low frequency band.

However, as described above, currently, the specification is designed such that a degree of priority of the frequency band is determined on the base station side, so that terminal devices will accordingly communicate wirelessly with the base station by giving priority to a specific frequency bands in accordance with the degree of priority that has been defined by the base station side, regardless of a traffic condition. As a result of this, this leads to a problem of a shortage of wireless resources as a result of many terminal devices tending to concentrate on using a specific frequency bands.

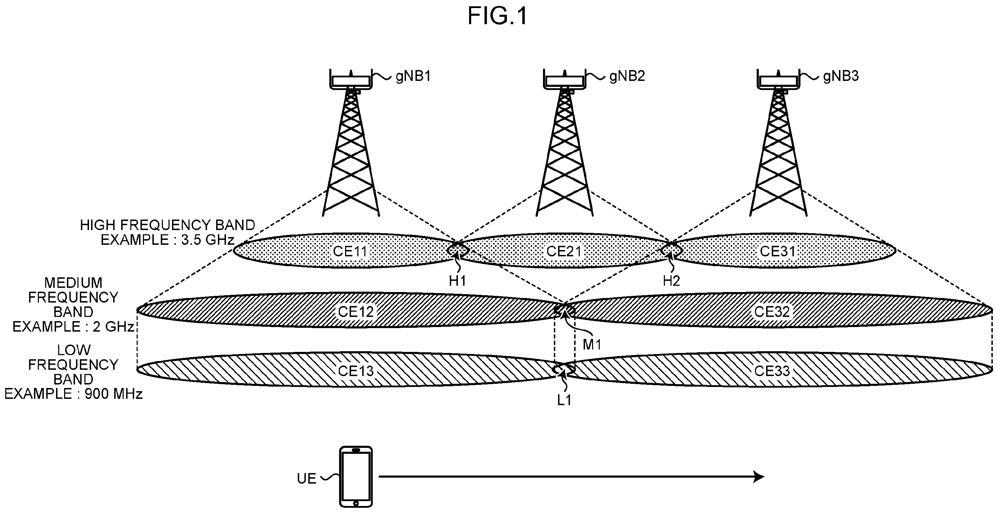

Furthermore, in general, a degree of priority is set such that a high frequency band is often given priority on the base station side. In this case, the terminal device performs a cell search starting with the high frequency band in which a degree of priority is set to be high, so that the terminal device selects a cell in the high frequency band as a standby destination. As a result of this, a handover frequently occurs because the terminal device moves while connecting to the base station by using the high frequency band with limited coverage. This point will be explained by using FIG. 1.

FIG. 1 is an explanation diagram for explaining a problem of a frequent occurrence of a handover. In FIG. 1, as one example of a base station gNB for the fifth generation (5G), a base station gNB1, a base station gNB2, and a base station gNB3 are illustrated, and these base stations gNB are adjacent with each other. That is to say, a cell that is formed by the base station gNB1, a cell that is formed by the base station gNB2, and a cell that is formed by the base station gNB3 are an adjacent relationship with each other, and, as illustrated in FIG. 1, a part of the cells are overlapped with each other.

In the example illustrated in FIG. 1, the base station gNB1 supports the three frequency bands of a high, a medium, and a low frequency bands, and forms a cell CE11 assigned with a high frequency band, a cell CE12 assigned with a medium frequency band, and a cell CE13 assigned with a low frequency band. Furthermore, the base station gNB3 also supports the three frequency bands of a high, a medium, and a low frequency bands, and forms a cell CE31 assigned with the high frequency band, a cell CE32 assigned with the medium frequency band, and a cell CE33 assigned with the low frequency band. On the other hand, the base station gNB2 only supports the high frequency band, and forms a cell CE21 assigned with the high frequency band.

In such an example, an overlap region H1 is generated between the cell CE11 and the cell CE21, and an overlap region H2 is generated between the cell CE21 and the cell CE31. Furthermore, an overlap region M1 is generated between the cell CE12 and the cell CE32, and an overlap region L1 is generated between the cell CE13 and the cell CE33. This example indicates that, in most cases, cells corresponding to a high frequency band have more overlap regions than cells corresponding to a medium or a low frequency band.

Here, a case in which the terminal device UE is handed over from the base station gNB1 to the base station gNB3 is considered, in a case where the terminal device UE moves between the cells assigned with the medium or the low frequency band, a single handover across one overlap region (the overlap region M1 or the overlap region L1) is sufficient, but in a case where the terminal device UE moves between the cells assigned with the high frequency band, two handovers occur across two overlap regions (the overlap region H1 and the overlap region H2). Furthermore, in a case where the terminal device UE moves back and forth between the base station gNB1 and the base station gNB3, more handovers accordingly occur in a case where the terminal device UE uses the low frequency band than in a case where the terminal device UE uses the high frequency band.

That is to say, based on the example illustrated in FIG. 1, it is found that the terminal device UE performs more handovers in a case where the terminal device UE uses the high frequency band than in a case where the terminal device UE uses the mid or the low frequency band, and a communication delay may increase in a situation in which handovers occur frequently. In order to reduce the delay, there is a need to suppress the frequency of the handovers. However, the terminal device with relatively high amount of traffic is allowed for the use of the high frequency band. On the other hand, it is conceivable that the terminal device with a relatively small amount of traffic or with no amount of traffic may be allowed for the use of the medium frequency band or the low frequency band.

As described above, each of the terminal devices UE has an optimum frequency band based on the traffic tendencies. Accordingly, an inventor of the present invention has noted that a problem of the handover illustrated in FIG. 1 is able to be optimized if the frequency band that is the target of use and to which priority is given for the use by the terminal device UE in accordance with the traffic tendency is optimized.

However, given the current situation in which a specification is designed such that the base station gNB is configured to give priority to a high frequency band for the terminal device UE, all of the terminal devices UE end up using the high frequency band regardless of the traffic of their own devices, and, as a result, it is not possible to optimize the problem of the handover illustrated in FIG. 1.

Here, there is identification information referred to as Subscriber ProfileI (SPID) that shows a degree of priority of a communication mode to an arbitrary terminal device UE. The base station gNB is able to instruct the terminal device UE to use the frequency band that has been set in the SPID. However, it is not assumed that the SPID does not change the settings dynamically. As a result of this, basically, in a case where the SPID is not present, the terminal device UE enters a standby mode at the frequency band according to a degree of priority that has been set on the base station gNB side, whereas, in a case where the SPID is present, the terminal device UE enters a standby mode at the frequency band that has been set by that SPID.

Namely, a proposed technology according to the present invention is based on the idea that takes advantage of the characteristic of being able to control the frequency band allowed for the use with priority, on condition that the SPID is used. More specifically, the proposed technology according to the present invention is a technology for grasping a correlation between result information that indicates whether or not the frequency band that has been used by the terminal device UE from among the frequency bands that are able to be supported by the base station gNB is optimum and context of the user of the terminal device UE, and deciding, based on the grasped correlation, the frequency band that is the target of use and to which priority is given for the use by the terminal device UE in wireless communication performed with the base station gNB. To give one example, the proposed technology according to the present invention is a technology for deciding, in a case where a certain tendency is able to be detected between, as the context of the user, a movement status (movement path) of the terminal device UE that is used by the user and a usage status (traffic status) of the network at the specific frequency band, an optimum frequency band based on this tendency as the frequency band that is target of use.

In the above, the background and the outline of the present invention have been explained. In the following, an embodiment of the present invention will be described with reference to the drawing. In the description below, the embodiment of the present invention will be described based on the assumption that the embodiment is applied to a wireless communication system for LTE/LTE-Advanced in 3GPP (registered trademark) and a wireless communication system for New Radio (NR) in next generation after the fifth generation and the subsequent generations, but the concept of the present invention is applicable to any system as long as the system that uses a similar configuration is used.

A communication control apparatus according to the embodiment described in this application acquires, as context information of the user that is used by the terminal device, traffic information that is related to traffic generated by the terminal device during wireless communication performed with the base station and movement information that is related to a movement of the terminal device according to the traffic. Then, the communication control apparatus generates a model that indicates a tendency of context of the user in accordance with the frequency band by training a relationship between result information that indicates whether or not the frequency band that has been used by the terminal device when the context information has been acquired is optimal for the context information from among the frequency bands that are able to be supported by the base station and the context information. Then, the communication control apparatus decides, on the basis of the model, the frequency band that is the target of use and to which priority is given for the use by the terminal device in the wireless communication. Furthermore, the communication control apparatus controls the wireless communication system (wireless cellular network system) such that wireless communication is performed in the frequency band that is the target of use.

### [2. Outline of system configuration]

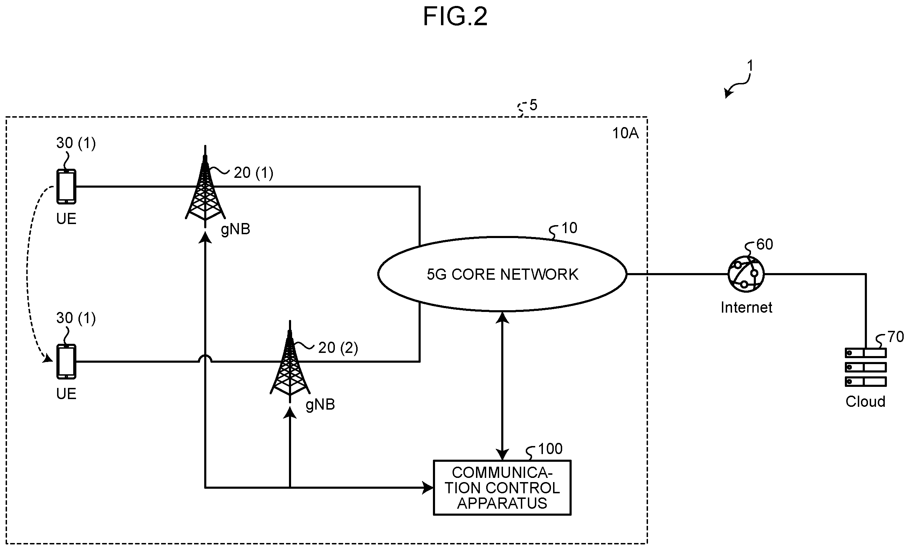

FIG. 2 is an explanation diagram illustrating one example of a schematic configuration of a system 1 according to the present. Furthermore, according to the example illustrated in FIG. 2, in the system 1, a wireless communication system (wireless cellular network system) 5 included in a communication control apparatus 100 according to the embodiment is included.

In FIG. 2, the wireless communication system 5 according to the embodiment is a mobile communication system used in a cellular system conforming to the fifth generation standards, and includes a 5G core network 10, a plurality of base stations 20 and a plurality of terminal devices 30, and each of the terminal devices 30 performs data communication (packet communication) with an external device provided in a cloud system (cloud) 70 via the base station 20, and furthermore, via the 5G core 10 and the Internet 60. In 5G, the base station 20 is referred to as a gNodeB (gNB).

Furthermore, in FIG. 2, an area 10A that is covered by the wireless communication system 5 is a service area wo which the wireless communication system 5 is provided. The wireless communication system 5 according to the embodiment may be expanded for each of the areas 10A, and, as one example, the area 10A may be formed of in units of prefectures. In other words, the communication control apparatus 100 may be installed for each local area corresponding to in units of prefectures.

The 5G core 10 is configured by a core network device that has various kinds of functions (nodes) referred to as network functions. The 5G core 10 corresponds to a portion that is connected from the wireless communication system 5 possessed by a communication common carrier T to the Internet 60. The communication common carrier T mentioned here may be a corporation that provides a connection service SV that gives priority for the use to a designated frequency band by using the communication control apparatus 100 according to the embodiment.

Furthermore, according to the example illustrated in FIG. 2, in the single area 10A, a base station 20 (1) and a base station 20 (2) are included. It is assumed that both of the base station 20 (1) and the base station 20 (2) support, as illustrated in FIG. 1, a plurality of frequency bands, and forms cells each corresponding to the respective frequency bands. In FIG. 2, as one example of the base station 20 included in the area 10A, the two base stations of the base station 20 (1) and the base station 20 (2) are illustrated, but the number of base stations included in the area 10A is not limited to the example.

Each of the base station 20 (1) and the base station 20 (2) is configured by using hardware, such as a computer device having, for example, a CPU and a memory, an external communication interface unit with respect to the 5G core 10, and a wireless communication unit, and, as a result of a predetermined program being executed, each of the base station 20 (1) and the base station 20 (2) is able to perform wireless communication between the terminal devices 30, is able to transmit and receive information to and from the core network device included in the 5G core 10, and is able to transmit and receive information to and from the communication control apparatus 100 by using a predetermined communication mode and a wireless communication resource.

The terminal device 30 is used by, for example, a user of a communication service, and is therefore referred to as a user device (User Equipment (UE)). Furthermore, the terminal device 30 is portable, and is sometimes referred to as a mobile station or a mobile device, and is also sometimes referred to as a wireless device.

In FIG. 2, as one example of the terminal device 30, a terminal device 30 (1) that is used by a user U1 is illustrated. The terminal device 30 (1) sometimes performs a handover that switches the base station 20 that is located at the connection destination from the base station 20 (1) to the base station 20 (2) in accordance with a movement of the terminal device 30 (1).

In a case where the terminal device 30 (1) is being connected to the base station 20 (1), the terminal device 30 (1) is able to perform various kinds of communication via the base station 20 (1), whereas, in a case where the terminal device 30 (1) is being connected to the base station 20 (2), the terminal device 30 (1) is able to perform various kinds of communication via the base station 20 (2). The terminal device 30 (1) is configured by using, for example, hardware, such as a computer device including a CPU, a memory, and the like, and a wireless communication unit, and is able to perform wireless communication with the base station 20 as a result of the predetermined program being executed.

Moreover, in FIG. 2, only the single piece of the terminal device 30 (1) that is used by the user U1 is illustrated, but, in practice, the plurality of terminal devices 30 that are used by the unspecified plurality of users U, respectively, are connected to the base station 20.

The communication control apparatus 100 is an information processing apparatus that executes a communication control process according to the proposed technology of the present invention. The communication control apparatus 100 acquires, as context information on the user U of the terminal device 30, traffic information that is related to traffic generated by the terminal device 30 during wireless communication performed with the base station 20 and movement information that is related to a movement of the terminal device 30 according to the traffic. Then, the communication control apparatus 100 generates a model that indicates a tendency of context of the user U in accordance with the frequency band by training a relationship between result information that indicates which frequency band that has been used by the terminal device 30 from among the frequency bands that are able to be supported by the base station 20 and the context information, and decides, on the basis of the model, the frequency band that is the target of use and to which priority is given for the use by the terminal device 30 in wireless communication. Furthermore, the communication control apparatus 100 controls the wireless communication system 5 such that wireless communication is performed in the frequency band that is the target of use.

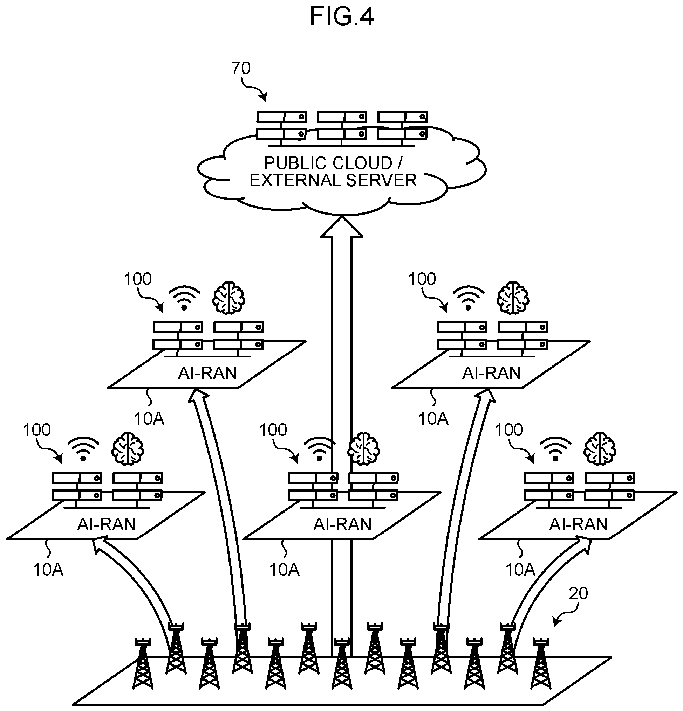

The communication control apparatus 100 may be provided in the 5G core 10 or may be installed in a data center or the like that is located in a remote area. For example, the communication control apparatus 100 may be installed in a local community center that is present for each of the areas 10A. This point will be described later with reference to FIG. 4.

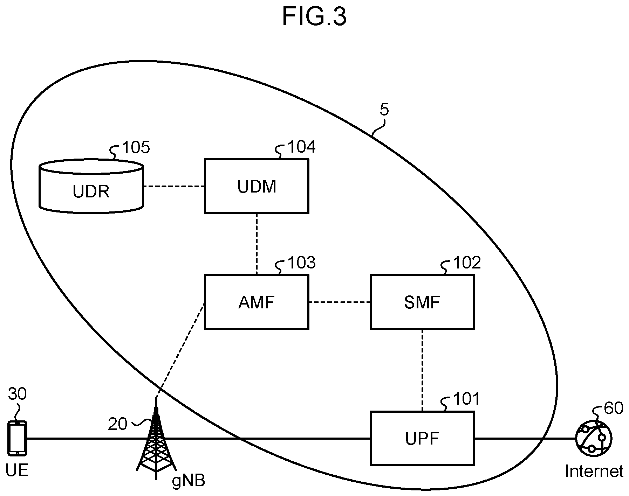

FIG. 3 is a diagram simply illustrating an architecture of the 5G core 10 included in the wireless communication system 5 according to the embodiment. The 5G core 10 is constituted by a portion of a control plane (C-Plane) serving as the overall control system of the mobile communication system in which control signals are mainly processed as a result of being transmitted and received, and a portion of a user plane (U-Plane) in which pieces of user data are mainly processed as a result of being transmitted and received. In FIG. 3, the communication performed at the C-Plane is indicated by the dotted line, whereas the communication performed at the U-Plane is indicated by the solid line.

In the C-Plane, a User Plane Function (UPF) 101, a Session Management Function (SMF) 102, an Access and Mobility Management Function (AMF) 103, a Unified Data Management (UDM) 104, and a Unified Data Repository (UDR) 105 are arranged. A description of the C-Plane will be omitted.

The UPF 101 has a function of subscriber communication packet transfer, or the like. The SMF 102 has a function of subscriber session management, or the like. For example, the SMF 102 establishes a Packet Data Unit (PDU) session while acquiring, from the AMF 103, information on the base station 20 that is connected to the terminal device 30.

The AMF 103 has a function of subscriber authentication, subscriber mobility management, and the like. For example, the AMF 103 performs a series of access management by making an inquiry of the UDM 104 or the UDR 105 about information on a subscriber, performing an authentication process for determining whether or not the terminal device 30 has the contract with a communication common carrier T, and providing a connection in a case where authentication is successful. Furthermore, the AMF 103 manages to determine which cell of the base station 20 the terminal device 30 is located such that the terminal device 30 is able to connect to the closest base station 20 in a case where the terminal device 30 has moved. That is to say, the AMF 103 is able to determine, as a movement path taken by the terminal device 30, which of the base station 20 the terminal device 30 has moved from to which of the base station 20.

The UDM 104 has a function of subscriber information management, or the like. The UDR 105 has a function of a subscriber information database, or the like.

FIG. 4 is a diagram conceptually illustrating advantages of installation of the communication control apparatus 100 in a local community center. For example, in order to support a society in which AI is evolving at an accelerated rate, there is a need to build next generation social infrastructure capable of coping with a rapidly increasing amount of data processing and a demand for electrical power needed for the data processing. Consequently, there is an AI-RAN concept that involves building a large scale server group in a data center located for each local (for example, for each of the areas 10A), and operating virtual Radio Access Network (vRAN = virtualization wireless access network), Multi-access Edge Computing (MEC), and an AI application at the same time on abundant computer resource, and enabling them to work together.

In FIG. 4, a scene in which the communication control apparatus 100 has been applied to the AI-RAN concept is illustrated. The communication control apparatus 100 that is present in each of the areas 10A is the AI-RAN that has a calculation platform and a training platform, and is arranged in a distributed state for each region. In this way, the communication control apparatus 100 serving as the AI-RAN may be a cloud server that is arranged in a distributed manner as an edge server (also referred to as a MEC server) in the vicinity of the terminal device 30, and is able to implement high speeds, large capacity, and low latency by utilizing a closed network that is isolated from the Internet 60. On the other hand, a service (for example, a training needed for a large scale computation or a large amount of electrical power) that utilizes pieces of data collected by the communication control apparatus 100 arranged in various places may be performed on the cloud 70 side through the Internet 60.

### [3. Configuration of AI-RAN]

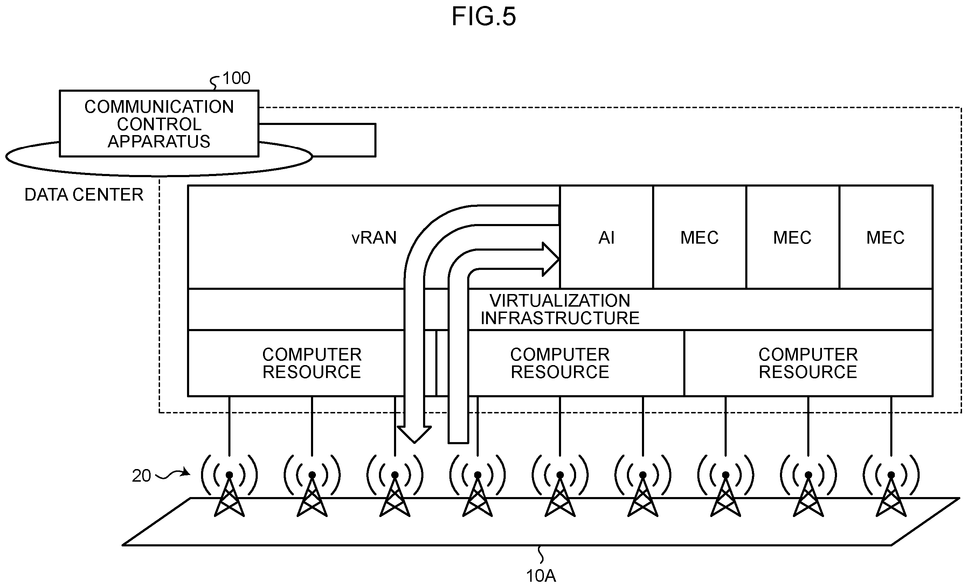

FIG. 5 is a diagram illustrating a configuration of the AI-RAN. In FIG. 5, a functional configuration of the AI-RAN held by the communication control apparatus 100 corresponding to the area 10A is illustrated. First, the AI-RAN is an architecture for making AI and RAN (the base station 20) coexist, is able to maximize the performance of the RAN by AI, and is able to implement an ultra low latency and highly secure the calculation platform for various kinds of AI applications at a local level.

In the example illustrated in FIG. 5, the vRAN is a virtualized 5G virtualization wireless access network in which the GPU of the communication control apparatus 100 virtualizes the RAN, that is, the base station 20 (the base station 20 that is included in the area 10A). That is to say, the communication control apparatus 100 illustrated in FIG. 5 is configured as the AI-RAN by integrating in a virtualization infrastructure environment in which vRAN and MEC in 5G are integrated, and furthermore, implementing the training platform (AI).

Furthermore, as an implementation example of the calculation platform at a local level, the computer resource corresponding to the base station 20 included in the area 10A is further provided.

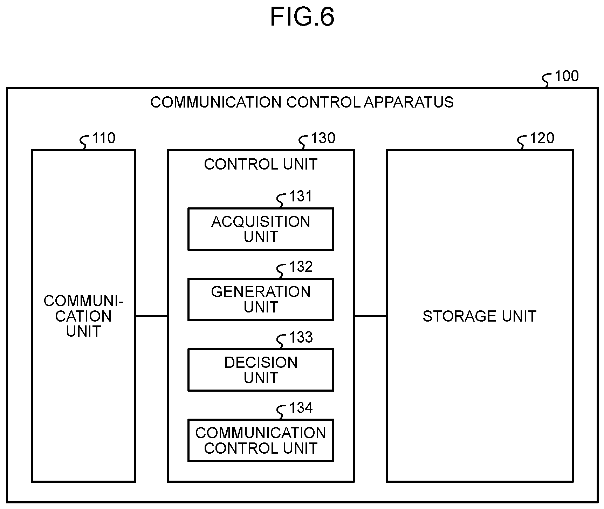

Moreover, a portion of the training platform held by the communication control apparatus 100 may correspond to a generation unit 132 (FIG. 6) that will be described later.

### [4. Configuration of communication control apparatus]

The communication control apparatus 100 according to the embodiment will be described with reference to FIG. 6. FIG. 6 is a diagram illustrating an example of a configuration of the communication control apparatus 100 according to the embodiment. As illustrated in FIG. 6, the communication control apparatus 100 includes a communication unit 110, a storage unit 120, and a control unit 130.

### (Regarding communication unit 110)

The communication unit 110 is implemented by, for example, a Network Interface Card (NIC), or the like. For example, the communication unit 110 performs wireless communication with the 5G core 10 or the base station 20.

### (Regarding storage unit 120)

The storage unit 120 is implemented by, for example, a semiconductor memory device, such as a random access memory (RAM) or a flash memory, or a storage device, such as a hard disk or an optical disk. The storage unit 120 may store therein data and program related to, for example, a communication control process according to the embodiment.

### (Regarding control unit 130)

The control unit 130 is implemented by a central processing unit (CPU), a micro processing unit (MPU), or the like executing various kinds of programs (for example, a communication control program according to the embodiment), which are stored in a storage device included in the communication control apparatus 100, by using a RAM as a work area. Furthermore, the control unit 130 is implemented by an integrated circuit, such as an application specific integrated circuit (ASIC) or a field programmable gate array (FPGA).

As illustrated in FIG. 6, the control unit 130 includes an acquisition unit 131, the generation unit 132, a decision unit 133, and a communication control unit 134, and implements or executes the function or the operation of the information processing described below. Moreover, the internal configuration of the control unit 130 is not limited to the configuration illustrated in FIG. 6, but another configuration may also be used as long as the configuration in which the information process that will be described later is performed. Furthermore, the connection relation between the processing units included in the control unit 130 is not limited to the connection relation illustrated in FIG. 6, and another connection relation may also be used.

### (Acquisition unit 131)

The acquisition unit 131 acquires, as the context information on the user U of the terminal device 30, the traffic information that is related to the traffic generated by the terminal device 30 during wireless communication performed with the base station 20 and the movement information that is related to a movement of the terminal device 30 in accordance with the traffic. It is assumed that the traffic information mentioned here includes a concept of an amount of traffic or a traffic behavior. Furthermore, the traffic behavior may indicate a transition of the amount of traffic in a certain period of time. Furthermore, in the movement information that is related to the movement of the terminal device 30, a base station ID that indicates a base station located at the connection destination to which the terminal device 30 is connected, a base station ID that indicates a base station located at the switch destination corresponding to a handover of the terminal device 30, or the like may be included. That is to say, in the movement information, information indicating that the terminal device 30 moves from which of the base stations 20 to which of the other base station 20 may be included.

Moreover, the acquisition unit 131 may acquire base station location information that indicates an installation location of the base station 20 from the base station design information DB, and is able to acquire a movement path of the terminal device 30 by checking the base station location information against the movement information. The location of the base station design information DB is not limited to the example described above. For example, the storage unit 120 included in the communication control apparatus 100 may include the base station design information DB, or each of the base stations 20 may include the base station design information DB.

### (Generation unit 132)

The generation unit 132 generates a model that indicates a tendency of the context of the user U in accordance with the frequency band by training a relationship between result information that indicates whether or not the frequency band that has been used by the terminal device 30 when the context information has been acquired is optimum for the context information from among the frequency bands that are able to be supported by the base station 20 and the context information. In a case where the context information on a predetermined user has been input, the generation unit 132 causes the model to train the relationship such that the model outputs an optimum frequency band according to the context of the predetermined user from among the frequency bands that are able to be supported by the base station 20.

Moreover, the information indicating whether or not the frequency band that has been used by the terminal device 30 at the time of acquisition of the context information is optimum with respect to the context information may be manually labeled, or may be dynamically assigned by setting a rule of assigning a label to the generation unit 132.

Furthermore, the acquisition unit 131 may further acquire the location information on the terminal device as the context information on the user U, and, in such a case, the generation unit 132 generates the model on the basis of the information that is specified on the basis of the location information on the terminal device 30.

### (Decision unit 133)

The decision unit 133 decides, on the basis of the model, the frequency band that is the target of use and to which priority is given for the use by the terminal device 30 in wireless communication between the terminal device 30 and the base station 20. For example, in a case where the context information on the predetermined user U is input to the model, the decision unit 133 decides the frequency band that is the target of use on the basis of the information that is related to the frequency band and that has been output from the model.

### (Communication control unit 134)

The communication control unit 134 performs control such that wireless communication is performed at the frequency band that is the target of use. For example, the communication control unit 134 controls nodes that are present in the 5G core 10 such that wireless communication is performed at the frequency band that is the target of use.

### (One example of control unit 130)

In the wireless communication between the terminal device 30 and the base station 20, the context information is linked to the first identification information for identifying the user U of the terminal device 30 as a subscriber, and is also associated with the temporary second identification information that acts as a replacement for the first identification information. The first identification information is International Mobile Subscriber Identity (IMSI). The IMSI is information for identifying the user U of the terminal device 30 or a subscriber, and is, in the present embodiment, a number that is allocated to the subscriber who uses the service provided by the communication common carrier T. The second identification information is a 5G S Temporary Mobile Subscription Identifier (5G-S-TMSI). The 5G-S-TMSI (hereinafter, simply referred to as "S-TMSI") is a temporary subscription identifier that is allocated to the user U (the user U of the terminal device 30) instead of the IMSI.

In the wireless communication, the S-TMSI is always used instead of the IMSI. Accordingly, the acquisition unit 131 acquires the context information with which the S-TMSI is associated. For example, the acquisition unit 131 acquires, as the context information that is to be used to generate the model, the context information with which the S-TMSI corresponding to the IMSI of a subscription user Ux who subscribes to the connection service SV that gives priority to the use of a designated frequency band from among the users U is associated. Furthermore, the acquisition unit 131 acquires the information on the frequency band that has been used by the terminal device 30 at the time of acquisition of the target context information.

In such a case, the generation unit 132 may generate the model on an individual subscription user basis by training the relationship between the context information that has been acquired for each of the subscription users Ux and the result information. Then, the decision unit 133 decides, on the basis of the model that has been generated on the individual subscription user basis, the frequency band that is the target of use and to which priority is given for the use by the terminal device 30 for each subscription user. The S-TMSI is also associated with the frequency band that is the target of use and that has been decided here. Accordingly, the communication control unit 134 converts the S-TMSI that is associated with the frequency band that is the target of use to the IMSI corresponding to the subject S-TMSI, and then registers the association information in which the converted IMSI is associated with third identification information (SPID) that indicates a degree of priority of the frequency band to be used into a subscriber information database in which the IMSI is stored. The subscriber information database mentioned here may be the UDR 105.

Here, in a case where the terminal device 30 has accessed the base station 20, the AMF 103 that is the core network device of the 5G core 10 performs an authentication process on the terminal device 30 on the basis of the IMSI that has been acquired from the terminal device 30 and the IMSI that is registered in the UDR 105 as the subscriber information. In a case where the AMF 103 is able to authenticate the terminal device 30, the AMF 103 acquires the association information that includes the IMSI related to the subject terminal device 30 from the UDR 105. That is to say, the AMF 103 acquires the SPID corresponding to the IMSI related to the terminal device 3. Then, the AMF 103 transmits the SPID to the base station 20 that is the connection destination of the terminal device 30. As a result of this, the base station 20 specifies the frequency band that is allowed for the use by the connected terminal device 30 from the SPID, and is able to perform wireless communication with the terminal device 30 by using the specified frequency band.

Moreover, by signing up for the connection service SV, the subscription user Ux will be able to configure settings such that, for example, the subscription user Ux is able to use the optimum frequency band in accordance with the own context information in the commuting time zone only during the commuting time zone. Furthermore, in order to implement this kind of settings, an application may be implemented to the transmission and reception of the information between the terminal device 30 and the communication control apparatus 100.

### [5. One example of generation of model]

The generation unit 132 may generate a model for each of the subscription users Ux. For example, the generation unit 132 uses, as an objective variable in the machine learning, the result information indicating whether or not the frequency band that has been used by the terminal device 30 of the subscription user Ux at the time of acquisition of the context information is optimum with respect to the context information from among the frequency bands that are able to be supported by the base station 20. Furthermore, the generation unit 132 uses the feature information extracted from the context information on the subscription user Ux or the location information on the subscription user Ux as an explanation variable in machine learning. Then, the generation unit 132 generates a model by using the objective variable and the explanation variable. As a result of this, the generation unit 132 is able to estimate, for example, an optimum frequency band according to the context of the subscription user U1x.

For example, in a case where the generation unit 132 is able to estimate a tendency of <an amount of traffic "A1" / a traffic behavior "A2" / a movement between the base station 20 (1) and the base station 20 (2), while using the high frequency band> by using the context information on the subscription user U1 as an input, the generation unit 132 is able to generate a model that is able to produce a result as an output indicating that the medium frequency band is optimal. Furthermore, in a case where the generation unit 132 is able to estimate a tendency of <an amount of traffic "B1" / a traffic behavior "B2" / a movement between the base station 20 (2) and the base station 20 (3), while using the low frequency band> by using the context information on the subscription user U1 as an input, the generation unit 132 is able to generate a model that is able to produce a result as an output indicating that the high frequency band is optimal. As another example, in a case where the generation unit 132 is estimate a tendency of <in a case of a movement between the base station 20 (3) and the base station 20 (4), in a standby mode instead of being connected> by using the context information on the subscription user U1 as an input, the generation unit 132 is able to generate a model that is able to produce a result as an output indicating that it is optimal to keep the device in a standby mode in the high frequency band.

### [6. Training process procedure]

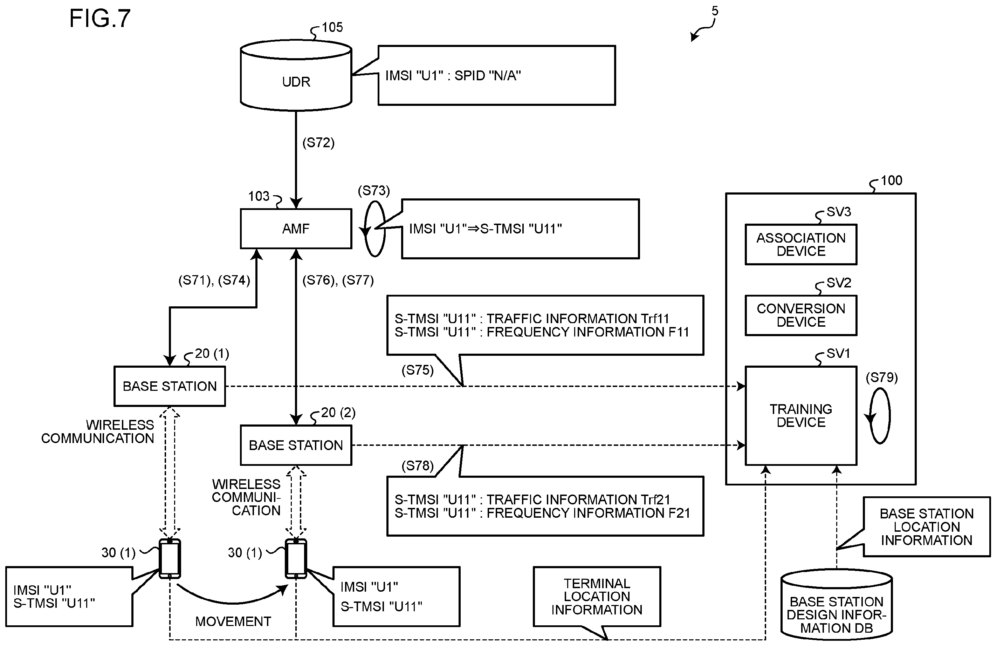

In the following, the procedure of the training process will be explained. FIG. 7 is a diagram for explaining the procedure of the training process that is implemented in the wireless communication system 5. In FIG. 7, a scene in which pieces of data that are used for a training are collected in accordance with a wireless communication and a movement of the terminal device 30 (1) of the subscription user U1, and a model is generated from the collected pieces of data is illustrated. Furthermore, FIG. 7 illustrates, as a part of this kind of scene, an example in which pieces of data for the training are collected during a handover in which the terminal device 30 (1) first connects to the base station 20 (1), and then, switches to the base station 20 (2).

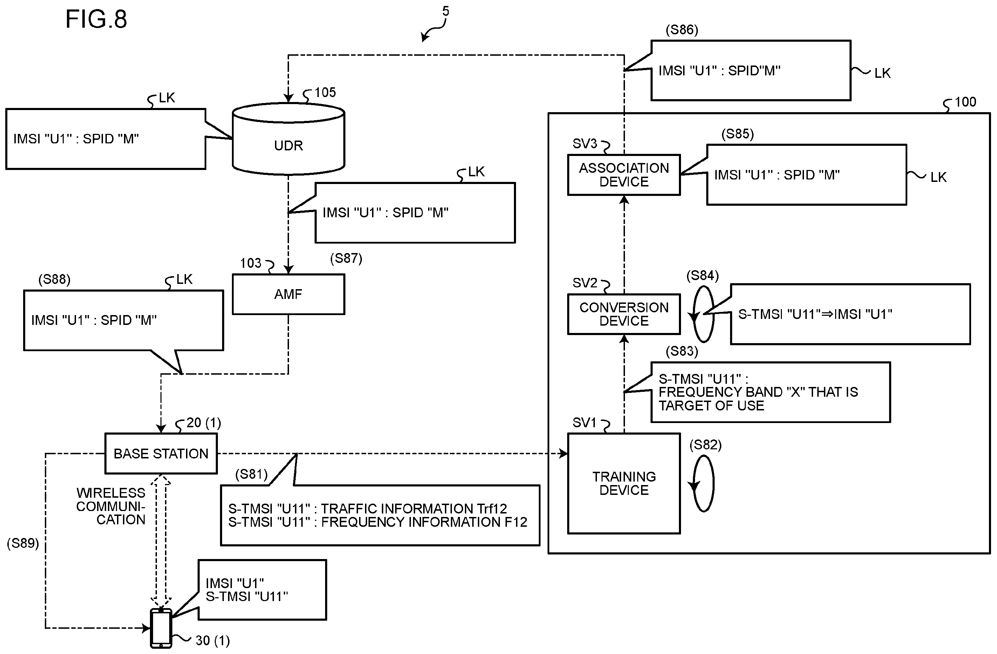

Moreover, in FIG. 7, transmission and reception of data between the base station 20 and the core network device of the 5G core 10, or, transmission and reception of data between the core network devices are indicated by the solid line arrow. In contrast, the flow of the data for the training is indicated by the dotted line arrow. Furthermore, a step number that indicates the processing procedure is indicated in parentheses. Furthermore, in the example illustrated in FIG. 7 (the same applies to FIG. 8), a function combining a training device SV1, a conversion device SV2, and an association information SV3 is referred to as the communication control apparatus 100. The training device SV1 includes the control unit 130 that has been explained with reference to FIG. 6.

As illustrated in FIG. 7, it is assumed that the terminal device 30 (1) includes an IMSI "U1", and the power supply is turned ON inside the cell that is formed by the base station 20 (1). In such a case, in order to be able to track the terminal device 30 (1) even if the terminal device 30 (1) moves, the terminal device 30 (1) requests the AMF 103 to register the own device by way of the base station 20 (1) (Step S71).

The AMF 103 refers to the subscriber information on the UDR 105 by using the IMSI "U1" that has been acquired from the terminal device 30, and performs the authentication process for determining whether or not the IMSI "U1" has been registered as the subscriber information (Step S72). Moreover, as will be described later, the association information in which the IMSI is associated with the SPID will be registered in the UDR 105 as a result of the communication control process according to the embodiment being performed. However, as illustrated in FIG. 7, it is assumed that, regarding the terminal device 30 (1), the SPID that is to be associated with the IMSI "U1" is not available "N/A" at the present stage in which the frequency band that is the target of use has not been determined.

Back to the explanation, the AMF 103 generates a temporary S-TMSI "U11" that is used as a replacement for the IMSI "U1" (Step S73), and transmits the generated S-TMSI "U11" to each of the base station 20 (1) and the terminal device 30 (1) (Step S74). As a result of this, each of the base station 20 (1) and the terminal device 30 (1) accordingly possesses the S-TMSI "U11", and is thus able to input the data to which the S-TMSI "U11" has been assigned from the base station 20 (1) to the training device SV1. Moreover, although not illustrated in FIG. 7, the SMF 102 sets a parameter for a PDU session in response to a request received from the AMF 103, and the PDU session is established by using the UPF 101 as an anchor point on the basis of the parameter.

In such a state, the base station 20 (1) inputs, to the training device SV1, both of the traffic information Trf11 that is associated with the S-TMSI "U11" and the frequency information F11 that is associated with the S-TMSI "U11" (Step S75).

In the traffic information Trf11, an amount of traffic and a traffic behavior obtained in a period of time in which the terminal device 30 (1) is connected to the base station 20 (1) and is communicating wirelessly with the base station 20 (1) may be included. In the frequency information F11, at the present time, the frequency band that has been used in accordance with a degree of priority defined on the base station 20 (1) side and the base station ID "20 (1)" for identifying the base station 20 (1) are included on the basis of the SPID indicated by "N/A".

The terminal device 30 (1) is moving and performs a handover to switch the connection destination to the base station 20 (2). At this time, a notification of the handover is transmitted to the AMF 103 by way of the base station 20 (2) (Step S76). The AMF 103 transmits the S-TMSI "U11" to the base station 20 (2) and the terminal device 30 (1) (Step S77). As a result of this, the base station 20 (2) also consequently possesses the S-TMSI "U11", and is able to input the data to which the S-TMSI "U11" has been assigned from the base station 20 (2) to the training device SV1. Moreover, although not illustrated in FIG. 7, in response to a request received from the AMF 103, the SMF 102 uses the UPF 101 as an anchor point in order to instruct the UPF 101 and the base station 20 (2) to switch the PDU session, and then the PDU session using the new base station 20 (2) is able to be used.

In such a state, the base station 20 (2) inputs, to the training device SV1, the traffic information Trf21 that is associated with the S-TMSI "U11" and the frequency information F21 is associated with the S-TMSI "U11" (Step S78).

In the traffic information Trf21, an amount of traffic and a traffic behavior obtained in a period of time in which the terminal device 30 (1) is connected to the base station 20 (2) and communicating wirelessly with the base station 20 (2) may be included. In the frequency information F21, the frequency band that has been used in accordance with a degree of priority defined on the base station 20 (2) side and the base station ID "20 (2)" for identifying the base station 20 (2) are included.

In FIG. 7, an example in which the base station 20 inputs the traffic information to the training device SV1 is exemplified, but, by providing a monitoring device that is used monitor traffic and that is connected to the Internet 60, a configuration in which the monitoring device inputs the traffic information to the training device SV1 may be adopted.

Furthermore, the location information (terminal location information) in accordance with a movement of the terminal device 30 (1) may be sequentially input to the training device SV1, and the location information (base station location information) in which the base station 20 (1) and the base station 20 (2) are installed may also be input to the training device SV1.

The training device SV1 generates training data from the pieces of data that are input up to now, and generates a model by performing machine learning by using the generated training data (Step S79). For example, the training device SV1 calculates a movement path RT taken by the terminal device 30 (1) from the base station 20 (1) to the base station 20 (2) on the basis of the base station location information on each of the base stations 20 identified by the base station ID included in the frequency information F11 and the frequency information F12 and on the basis of the terminal location information. Furthermore, the training device SV1 calculates the context information CX indicating what kind of frequency band is used by the terminal device 30 (1), and what kind of amount of traffic and what kind of traffic behavior during the movement path RT, on the basis of the traffic information Trf11, the traffic information Trf21, and the movement path RT. Then, the training device SV1 determines whether or not the frequency band indicated at the time at which the terminal device 30 (1) indicates the context information CX is optimal with respect to the context information CX. Here, the training device SV1 uses, as the objective variable, data obtained by assigning the determination result as a correct answer label to the frequency band indicated at the time at which the terminal device 30 (1) indicates the context information CX. For example, the training device SV1 may assign, as the correct answer label, the determination result obtained by determining whether or not the actually used frequency band has been optimal, on the basis of the frequency in an occurrence of a handover between the base station 20 (1) and the base station 20 (2), a usage status (congestion level) of the wireless resource between the base station 20 (1) and the base station 20 (2), and the optimum frequency band in an amount of traffic at the movement path RT, and on the basis of the actually used frequency band.

Furthermore, the training device SV1 uses the feature information that has been extracted from the context information CX as an explanation variable in machine learning. As a result of this, the training device SV1 is able to train the model such that, in a case where new data obtained by the terminal device 30 (1) from wireless communication performed with the base station 20 has been input, the training device SV1 estimates a tendency of the context in accordance with the input data and outputs an optimum frequency band for the estimated tendency as the frequency band that is the target of use.

Moreover, the training device SV1 is also able to use, as the training data, a type of the content that is estimated from an amount of traffic or a traffic behavior (for example, moving image content, still image content, etc.). The training device SV1 may generate a model by using pieces of data that are used for training acquired in a period of time between a point at which the connection service SV is requested and a point at which the connection service SV becomes available as the training period of time.

Furthermore, it is preferable that training device SV1 has a configuration that allows for identification of information in which the S-TMSI "U11" corresponds to the IMSI "U1" for identifying the subscription user U1 who subscribes to the connection service SV. For example, the training device SV1 may adopt a configuration in which a combination list of a combination of the IMSI and the S-TMSI is acquired from the AMF 103, or a configuration in which the IMSI corresponding to the S-TMSI is able to be discerned on the own device side. As a result of this, the training device SV1 is able to extract only the training data for the subscription user U1 from among the pieces of data that are input from the base station 20, also regarding unspecified number of users U other than the subscription user U1, and is able to generate a model that has been customized for the subscription user U1. The explanation has been made by using subscription user U1 as an example, but the same also applies to the other user U.

### [7. Inference process procedure]

In the following, the procedure of the inference process performed by using the model that has been generated in the procedure illustrated in FIG. 7. FIG. 8 is a diagram for explaining the procedure of the inference process implemented in the wireless communication system 5. FIG. 8 illustrates a scene in which, at a timing of a time zone (for example, a commuting time zone) in which the subscription user U1 has applied for the connection service SV, an optimum frequency band according to a tendency of the context of the subscription user U1 in this time zone is decided.

Moreover, in FIG. 8, the flow of the data that is used for an inference is indicated by the dotted line arrow with a dashed line, and wireless communication control performed by using the frequency band that is the target of use is indicated by the dotted line arrow with a two-dot chain line. Furthermore, a step number that indicates the processing procedure is indicated in parentheses.

For example, it is assumed that, in a state in which the terminal device 30 (1) of the subscription user U1 is communicating wirelessly with the base station 20 (1), the time zone specified by the subscription user U1 has arrived. As illustrated in FIG. 8, in the time zone specified by the subscription user U1, the base station 20 (1) inputs the traffic information Trf12 that is associated with the S-TMSI "U11" and the frequency information F12 that is associated with the S-TMSI "U11" to the training device SV1 (Step S81).

In the traffic information Trf12, an amount of traffic and a traffic behavior obtained in a period of time in which the terminal device 30 (1) is connected to the base station 20 (1) and communicating wirelessly with the base station 20 (1) may be included. In the frequency information F12, at the present time, the frequency band that has been used in accordance with a degree of priority defined on the base station 20 (1) side and the base station ID "20 (1)" for identifying the base station 20 (1) are included on the basis of the SPID indicated by "N/A".

The training device SV1 causes the model to perform the inference process by inputting the data acquired from the base station 20 (1) at Step S81 as inference purpose data to the model (Step S82). As a result of this, the model outputs an optimum frequency band according to the tendency of the context in the time zone designated by the subscription user U1. Accordingly, the training device SV1 decides the frequency band that has been output from the model as a frequency band "X" that is the target of use (Step S82). It is assumed that "X" is one of a high frequency band (H), a medium frequency band (M), and a low frequency band (L).

The S-TMSI "U11" is associated with the frequency band "X" that is the target of use. Accordingly, the conversion device SV2 converts the S-TMSI "U11" and obtains the original IMSI "U1" (Step S84).

An association device SV3 generates association information in which the IMSI "U1" that has been obtained at the time of conversion is associated with a SPID "X" in which the frequency band "X" that is the target of use is defined as the frequency band of the priority use (Step S85). In an explanation made below, an example in which "M" (medium frequency band) has been decided as the frequency band that is the target of use, whereas the terminal device 30 (1) uses the high frequency band in the time zone designated by the subscription user U1. In such an example, the association device SV3 generates, as illustrated in FIG. 8, association information LK in which the IMSI "U1" is associated with the SPID "M".

Then, the association device SV3 transmits the association information LK to the UDR 105, and registers the association information LK as the subscriber information on the subscription user U1 (Step S86). In the example illustrated in FIG. 7, the SPID that is associated with the IMSI "U1" is not available "N/A", but is replaced with the SPID "M" at this time. As described above, the base station 20 will be able to instruct the terminal device 30 to use the frequency band that has been set in the SPID. Accordingly, the base station 20 (1) is able to allow the terminal device 30 (1) to use the medium frequency band instead of the high frequency band in the time zone designated by the subscription user U1 on the basis of the SPID "M".

First, the AMF 103 extracts the association information LK from the subscriber information on the UDR 105 (Step S87). Then, the AMF 103 transmits the association information LK to the base station 20 (1) (Step S88).

The base station 20 (1) specifies, on the basis of the association information LK, that the frequency band to which priority is given for the use by the terminal device 30 (1) is the "medium frequency band", and instructs the terminal device 30 (1) to use the "medium frequency band" (Step S89).

Up to here, the flow of the communication control process according to the embodiment has been explained by using FIG. 7 and FIG. 8. According to the communication control process illustrated in FIG. 7 and FIG. 8, it is possible to implement an improvement of an experience of the user U and a reduction in a load (for example, a handover process) applied to a mobile network by connecting to the optimum frequency band according to the traffic behavior and the movement path without the user U concentrating on using a specific frequency band. Furthermore, the user U will be able to select whether or not to take advantage of frequency selection optimization based on mobility.

### [8. Other embodiments]

The communication control apparatus 100 described above may also be implemented with various kinds of embodiments other than the embodiments described above. Accordingly, in the following, another embodiment of the communication control apparatus 100 will be described.

In the above described embodiment, a case has been described as an example in which the communication control apparatus 100 generates a model for each of the subscription users Ux targeted for the subscription user Ux who has signed up for the connection service SV, and assigns an optimum frequency band in accordance with application details of the subscription user Ux. However, the communication control apparatus 100 may forcibly control the frequency band targeted for all of the users U regardless of the connection service SV. As a result of this, for example, the communication common carrier T will be able to stimulate a function that allows the terminal device 30 of each of the users U to use an optimum frequency band in accordance with the tendency of the context.

### [9. Hardware configuration]

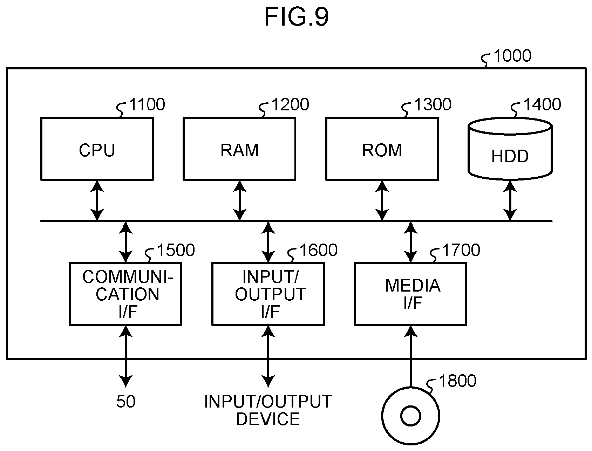

The communication control apparatus 100 according to the embodiment may be implemented by, for example, a computer 1000 having a configuration illustrated in FIG. 9. FIG. 9 is a diagram of a hardware configuration illustrating one example of a computer that implements the function of the communication control apparatus 100 according to the embodiment. The computer 1000 includes a CPU 1100, a RAM 1200, a ROM 1300, an HDD 1400, a communication interface (I/F) 1500, an input/output interface (I/F) 1600, and a media interface (I/F) 1700.

The CPU 1100 operates on the basis the program stored in the ROM 1300 or the HDD 1400, and performs control of each of the units. The ROM 1300 stores therein a boot program executed by the CPU 1100 at the time of activation of the computer 1000, a program that depends on the hardware of the computer 1000, and the like.

The HDD 1400 stores therein the program executed by the CPU 1100, data used by the program, and the like. The communication interface 1500 receives data from another device via a predetermined communication network, sends the received data to the CPU 1100, and then transmits the data generated by the CPU 1100 to the other device via the predetermined communication network.

The CPU 1100 controls an output device, such as a display, and an input device, such as a keyboard, via the input/output interface 1600. The CPU 1100 acquires the data from the input device via the input/output interface 1600. Furthermore, the CPU 1100 outputs the generated data to the output device via the input/output interface 1600.

The media interface 1700 reads the program or the data stored in a recording medium 1800 and provides the read program or data to the CPU 1100 via the RAM 1200. The CPU 1100 loads the program into the RAM 1200 from the recording medium 1800 via the media interface 1700 and executes the loaded program. The recording medium 1800 is, for example, an optical recording medium, such as a digital versatile disk (DVD), a magneto optical recording medium, such as a magneto optical disk (MO), a tape medium, a magnetic recording medium, or a semiconductor memory.

For example, in a case where the computer 1000 functions as the information processing apparatus 100 according to the embodiment, the CPU 1100 included in the computer 1000 executes the program loaded in the RAM 1200 and implements the functions of the control unit 130. The CPU 1100 included in the computer 1000 reads these programs from the recording medium 1800 and executes the programs, but, as another example, the CPU 1100 may acquire these programs from a different device via the predetermined communication network.

### [10. Others]

Furthermore, of the processes described in the embodiment, the whole or a part of the processes that are mentioned as being automatically performed can also be manually performed, whereas the whole or a part of the processes that are mentioned as being manually performed can also be automatically performed using known methods. Furthermore, the flow of the processes, the specific names, and the information containing various kinds of data or parameters indicated in the above specification and drawings can be arbitrarily changed unless otherwise stated. For example, the various kinds of information illustrated in each of the drawings are not limited to the information illustrated in the drawings.

Furthermore, the components of each device illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, each of the embodiments described above can be appropriately used in combination as long as the processes do not conflict with each other.

In the above, some of embodiments of the present application have been described in detail based on the drawings, but the embodiments are described only by way of an example, and the present invention may be implemented in a mode in which various modifications and improvements have been made on the basis of the aspects described in the section of the disclosure of the present invention and the knowledge of those skilled in the art.

### Reference Signs List

1 system
5 wireless communication system
10 5G core network
20 base station
30 terminal device
60 Internet
70 cloud system
100 communication control apparatus
110 communication unit
120 storage unit
130 control unit
131 acquisition unit
132 generation unit
133 decision unit
134 communication control unit

## Claims

1. A communication control apparatus comprising:
an acquisition unit that acquires, as context information on a user of a terminal device, traffic information that is related to traffic generated by the terminal device during wireless communication performed with a base station and movement information that is related to a movement of the terminal device according to the traffic;
a generation unit that generates a model that indicates a tendency of context of the user in accordance with a frequency band by training a relationship between result information that indicates whether or not the frequency band that has been used by the terminal device when the context information has been acquired is optimal for the context information from among the frequency bands that are able to be supported by the base station and the context information;
a decision unit that decides, based on the model, the frequency band that is a target of use and to which priority is given for a use by the terminal device in the wireless communication; and
a control unit that performs control such that the wireless communication is performed in the frequency band that is the target of use.

2. The communication control apparatus according to claim 1, wherein
the acquisition unit further acquires location information on the terminal device as the context information on the user, and
the generation unit generates the model based on information that is specified based on the location information on the terminal device.

3. The communication control apparatus according to claim 1, wherein, in a case where the context information on a predetermined user has been input, the generation unit causes the model to train the relationship such that the model outputs the frequency band according to the context of the predetermined user from among the frequency bands that are able to be supported by the base station.

4. The communication control apparatus according to claim 1, wherein
in the wireless communication, the context information is linked to first identification information for identifying the user of the terminal device as a subscriber, and is also associated with temporary second identification information that acts as a replacement of the first identification information, and
the acquisition unit acquires the context information that is associated with the second identification information.

5. The communication control apparatus according to claim 4, wherein
the acquisition unit acquires, as the context information that is to be used to generate the model, the context information to which the second identification information corresponding to the first identification information on the subscription user who subscribes to a connection service that gives priority to the use of a designated frequency band from among the users, and acquires information on the frequency band that has been used by the terminal device used by the subscription user at the time of acquisition of the target context information,
the generation unit generates the model classified by the subscription users by training a relationship between the target context information that has been acquired for each of the subscription users and the result information, and
the decision unit decides, based on the model that has been generated classified by the subscription users, the frequency band that is the target of use and to which priority is given for the use by the terminal device for each of the subscription users.

6. The communication control apparatus according to claim 4, wherein
the second identification information is associated with the frequency band that is the decided target of use, and
the control unit converts the second identification information that is associated with the frequency band that is the target of use to the first identification information corresponding to the second identification information, and registers association information in which the converted first identification information is associated with third identification information that indicates a degree of priority of the frequency band to be used into a subscriber information database in which the first identification information is stored.

7. A wireless communication system comprising:
the communication control apparatus according to claim 6;
the base station that transmits the context information to the communication control apparatus; and
a core network to which the base station is connected, wherein,
in a case where the terminal device has accessed the base station, a predetermined core network device that is included in the core network that is connected to the base station performs an authentication process on the terminal device based on the identification information that has been acquired from the terminal device and based on the first identification information that is registered in the subscriber information database, and, in a case where the predetermined core network device has been able to authenticate the terminal device, the predetermined core network device transmits the third identification information corresponding to the authenticated terminal device to the base station located at an access destination.

8. The wireless communication system according to claim 7, wherein the base station located at the access destination performs wireless communication with the terminal device by using the frequency band that is the target of use and that is prioritized by the third identification information that has been acquired from the predetermined core network device.

9. A communication control method performed by a communication control apparatus, the information processing method comprising:
an acquisition step of acquiring, as context information on a user of a terminal device, traffic information that is related to traffic generated by the terminal device during wireless communication performed with a base station and movement information that is related to a movement of the terminal device according to the traffic;
a generation step of generating a model that indicates a tendency of context of the user in accordance with a frequency band by training a relationship between result information that indicates whether or not the frequency band that has been used by the terminal device when the context information has been acquired is optimal for the context information from among the frequency bands that are able to be supported by the base station and the context information;
a decision step of deciding, based on the model, the frequency band that is a target of use and to which priority is given for a use by the terminal device in the wireless communication; and
a control step of performing control such that the wireless communication is performed in the frequency band that is the target of use.

10. A communication control program that causes a computer to execute a process comprising:
an acquisition step of acquiring, as context information on a user of a terminal device, traffic information that is related to traffic generated by the terminal device during wireless communication performed with a base station and movement information that is related to a movement of the terminal device according to the traffic;
a generation step of generating a model that indicates a tendency of context of the user in accordance with a frequency band by training a relationship between result information that indicates whether or not the frequency band that has been used by the terminal device when the context information has been acquired is optimal for the context information from among the frequency bands that are able to be supported by the base station and the context information;
a decision step of deciding, based on the model, the frequency band that is a target of use and to which priority is given for a use by the terminal device in the wireless communication; and
a control step of performing control such that the wireless communication is performed in the frequency band that is the target of use.
